(19) Europäisches Patentamt
European Patent Office
Office européen des brevets

(11) **EP 4 489 114 A1**

(12) **EUROPEAN PATENT APPLICATION**
published in accordance with Art. 153(4) EPC

(43) Date of publication:
08.01.2025 Bulletin 2025/02

(21) Application number: 23841722.4

(22) Date of filing: 15.02.2023

(51) International Patent Classification (IPC):
$H01M\ 4/36^{(2006.01)}$       $H01M\ 4/525^{(2010.01)}$
$H01M\ 4/485^{(2010.01)}$     $H01M\ 4/505^{(2010.01)}$
$H01M\ 4/62^{(2006.01)}$

(52) Cooperative Patent Classification (CPC):
Y02E 60/10

(86) International application number:
PCT/CN2023/076050

(87) International publication number:
WO 2024/016644 (25.01.2024 Gazette 2024/04)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 18.07.2022 CN 202210841386

(71) Applicant: Ningbo Ronbay New Energy
Technology Co., Ltd.
Yuyao Ningbo, Zhejiang 315402 (CN)

(72) Inventors:
• WANG, Biwu
  Ningbo, Zhejiang 315402 (CN)
• HUANG, Xiaoxiao
  Ningbo, Zhejiang 315402 (CN)
• YU, Jian
  Ningbo, Zhejiang 315402 (CN)
• SUN, Hui
  Ningbo, Zhejiang 315402 (CN)

(74) Representative: Bandpay & Greuter
11 rue Christophe Colomb
75008 Paris (FR)

(54) **HIGH-NICKEL TERNARY POSITIVE ELECTRODE MATERIAL HAVING HIGH THERMAL SAFETY, PREPARATION METHOD THEREFOR, AND USE THEREOF**

(57)    The present invention provides a high-nickel ternary positive electrode material having high thermal safety. According to the high-nickel ternary positive electrode material provided in the present invention, significant factors affecting the thermal safety of the ternary positive electrode material are identified by measuring a thermal conductivity K, a D104 value in XRD, and a porosity $\alpha$ of the material. In addition, corresponding materials are prepared by means of controlling these parameters and satisfying the relationship shown in Formula I for verification. Furthermore, the high-nickel ternary positive electrode material is improved by coating with a coating material having a low thermal conductivity. The thermal conductivity of the coated material is tested, and the results indicate that with an increase in the coating amount of the coating material, the thermal conductivity of the ternary positive electrode material is in overall decrease, and the ternary positive electrode material has a better thermal safety.

FIG. 10

**Description**

This application claims priority to Chinese Patent Application No. 202210841386.3, filed with the China National Intellectual Property Administration on July 18, 2022, entitled with "HIGH-NICKEL TERNARY POSITIVE ELECTRODE MATERIAL HAVING HIGH THERMAL SAFETY, PREPARATION METHOD THEREFOR, AND USE THEREOF", which is hereby incorporated by reference in its entirety.

**TECHNICAL FIELD**

The present invention relates to the technical field of lithium ion batteries, and in particular to a high-nickel ternary positive electrode material having high thermal safety, a preparation method therefor, and use thereof.

**BACKGROUND**

With the popularization of new energy electric vehicles and the strong support of the country for the new energy industry, positive electrode materials, as one of the main raw materials for batteries, have also received attention, of which the most prominent is ternary positive electrode materials. The most important application of these materials is power energy batteries. However, in recent years, the spontaneous combustion phenomenon of new energy vehicles has occurred frequently, thus the safety of new energy vehicles has been pushed to the forefront. In the face of such a situation, how to ensure the thermal safety of batteries has become an urgent problem for various manufacturers and research institutions, there have been some new breakthroughs from the battery level, but there are few results in positive electrode ternary materials. In the existing patent CN108550802A, the volume change of the material is reduced by doping a small amount of $Y^{3+}$ ions and replacing some $Ni^{3+}$ sites with $La^{3+}$ ions to utilize electrochemical inertness of $Y^{3+}/La^{3+}$ ions during charging and discharging, thereby increasing the stability of the structure, and improving the thermal safety. In the patent CN112811403A, the stability of the crystal structure of the material is enhanced by Mg/Ti co-doping, and in combination with the coating of $Li_3PO_4$, layered distribution of doping and coating is achieved. The $Li_3PO_4$ coating layer enhances the surface stability, helps to reduce the electrochemical impedance and side reactions of the electrolyte solution, thereby improving the thermal stability of the high-nickel ternary positive electrode material.

In most of the existing technologies, the stability of the structure of a material is enhanced by doping electrochemically inert substances, and coating substances with stabilizing properties to isolate the contact between the ternary positive electrode material and HF, inhibiting the heat release due to the decomposition of material and the precipitation of metals. However, doping this kind of electrochemical inert substances has a great influence on the electronic conductivity and reaction activity of material itself, which is disadvantageous to the electrochemical performance of the material, and at the same time, this kind of multielement doping and multistep coating process increases the cost and the complexity of the manufacturing process.

**SUMMARY**

In view of this, the technical problem to be solved by the invention is to provide a high-nickel ternary positive electrode material having high thermal safety, a preparation method therefor, and a use thereof. The high-nickel ternary positive electrode material provided by the present invention has an overall lower thermal conductivity, better thermal safety, and good electrical properties.

The present invention provides a high-nickel ternary positive electrode material having high thermal safety, and the high-nickel ternary positive electrode material has a chemical formula of

$$LiNi_aCo_bMn_cM_dQ_eO_2,$$

where $0.8 < a < 0.95$, $b < 0.2$, $c < 0.2$, $d < 0.1$, $a+b+c+d+e=1$,
M is a doping element, selected from one or more of Sr, Ti, Al, Zr, Y, Ba, Mg, or Mo,
Q is a coating element, selected from one or both of Sr or Ti,
the high-nickel ternary positive electrode material satisfies a relationship shown in Formula I:

$$\gamma = \alpha * D104/K \quad \text{Formula I}$$

In Formula I, $0.73 \leq \gamma \leq 14.00$, $\gamma$ is a thermal safety coefficient of the high-nickel ternary positive electrode material, $\alpha$ is a cross-sectional porosity of the high-nickel ternary positive electrode material, D104 is a parameter of the high-nickel ternary positive electrode material in a XRD test, and K is a thermal conductivity of the high-nickel ternary positive electrode material.

Preferably,

$$45 \leq D104 \leq 70.$$

Preferably,

$$1\% \leq \alpha \leq 5\%.$$

Preferably,

$$0.1 \mathrm{W/(m \cdot K)} \leq K \leq 0.6 \ \mathrm{W/(m \cdot K)}.$$

Preferably, a core as well as a coating layer is included, and the coating layer has a thermal conductivity coefficient of $\leq 0.2$ W/(m•K).

The present invention also provides a method for preparing the above-described high-nickel ternary positive electrode material, including the following steps:

A) mixing a ternary hydroxide precursor $Ni_aCo_bMn_c(OH)_2$, a lithium source, and a compound containing the element M, and then sintering under an oxygen atmosphere to obtain a sintered product;

B) washing and drying the sintered product, mixing the sintered product with a compound containing the element Q, and then sintering under the oxygen atmosphere to obtain the high-nickel ternary positive electrode material.

Preferably, the lithium source is selected from LiOH;

the compound containing the element M is selected from one or more of $Al(OH)_3$, $Al_2O_3$, SrO, $TiO_2$, $ZrO_2$, $Zr(OH)_4$, $Y_2O_3$, $BaCO_3$, MgO, or $MoO_3$;

the compound containing the element Q is selected from $TiO_2$, SrO, or $SrTiO_3$.

Preferably, in step A), the sintering is performed at a temperature of 740°C - 820°C for a time of 10 - 15 hours.

Preferably, in step B), the sintering is performed at a temperature of 350 - 500°C for a time of 8 - 12 hours.

The invention also provides a lithium ion battery including the high-nickel ternary positive electrode material described as above.

Compared with the prior art, the present invention provides a high-nickel ternary positive electrode material having high thermal safety, the chemical formula of the high-nickel ternary positive electrode material is: $LiNi_aCo_bMn_cM_{d-}Q_eO_2$, where $0.8 < a < 0.95$, $b < 0.2$, $c < 0.2$, $d < 0.1$, $a+b+c+d+e=1$; M is a doping element, selected from one or more of Sr, Ti, Al, Zr, Y, Ba, Mg, or Mo; Q is a coating element, selected from one or both of Sr or Ti; the high-nickel ternary positive electrode material satisfies the relationship shown in Formula I: $\gamma=\alpha*D104/K$; in Formula I, $0.73 \leq \gamma \leq 14.00$, $\gamma$ is a thermal safety coefficient of the high-nickel ternary positive electrode material, $\alpha$ is a cross-sectional porosity of the high-nickel ternary positive electrode material, D104 is a parameter in a XRD test for the high-nickel ternary positive electrode material, and K is a thermal conductivity of the high-nickel ternary positive electrode material. According to the high-nickel ternary positive electrode material provided in the present invention, significant factors affecting the thermal safety of the ternary positive electrode material are identified by measuring the thermal conductivity K, the D104 value in XRD, and the porosity $\alpha$ of the material. In addition, corresponding materials are prepared by means of controlling these parameters and satisfying the relationship shown in Formula I for verification. Furthermore, the high-nickel ternary positive electrode material is improved by coating with a coating material having a low thermal conductivity. The thermal conductivity of the coated material is tested, and the results indicate that with an increase in the coating amount of the coating material, the thermal conductivity of the ternary positive electrode material is in overall decrease, and the ternary positive electrode material has a better thermal safety.

**BRIEF DESCRIPTION OF DRAWINGS**

FIG. 1 shows a cross-sectional pore distribution diagram of sample A.
FIG. 2 shows a cross-sectional pore distribution diagram of sample B.
FIG. 3 shows a cross-sectional pore distribution diagram of sample C.

FIG. 4 shows a cross-sectional pore distribution diagram of sample D.
FIG. 5 shows a cross-sectional pore distribution diagram of sample E.
FIG. 6 shows a SEM diagram of a surface of Sample F.
FIG. 7 shows a SEM diagram of a surface of Sample G.
FIG. 8 shows a SEM diagram of a surface of Sample H.
FIG. 9 shows a SEM diagram of a surface of Sample I.
FIG. 10 shows a comparison of DSC data of samples A - E.
FIG. 11 shows a comparison of DSC data of samples A, F, G and H
FIG. 12 shows DSC data of sample I.

## DESCRIPTION OF EMBODIMENTS

The present invention provides a high-nickel ternary positive electrode material having high thermal safety, and the chemical formula of the high-nickel ternary positive electrode material is:

$$LiNi_aCo_bMn_cM_dQ_eO_2,$$

where $0.8 < a < 0.95$, $b < 0.2$, $c < 0.2$, $d < 0.1$, $a+b+c+d+e=1$,
M is a doping element, selected from one or more of Sr, Ti, Al, Zr, Y, Ba, Mg, or Mo,
Q is a coating element, selected from one or both of Sr or Ti,
the high-nickel ternary positive electrode material satisfies a relationship shown in Formula I:

$$\gamma=\alpha*D104/K \quad \text{Formula I}$$

In Formula I, $0.73 \leq \gamma \leq 14.00$, $\gamma$ is a thermal safety coefficient of the high-nickel ternary positive electrode material, $\alpha$ is a cross-sectional porosity of the high-nickel ternary positive electrode material, D104 is a parameter of the high-nickel ternary positive electrode material in a XRD test, and K is a thermal conductivity of the high-nickel ternary positive electrode material.

In the present invention, the chemical formula of the high-nickel ternary positive electrode material is:

$$LiNi_aCo_bMn_cM_dQ_eO_2,$$

where $0.8 < a < 0.95$, $b < 0.2$, $c < 0.2$, $d < 0.1$, $a+b+c+d+e=1$. In addition, b, c, and d are not zero.

M is a doping element, selected from one or more of Sr, Ti, Al, Zr, Y, Ba, Mg, or Mo, preferably Al, Mo, Sr, and Zr.

Q is a coating element, selected from one or both of Sr or Ti, preferably both Sr and Ti.

In the present invention, the high-nickel ternary positive electrode material includes a core and a coating layer, where the chemical formula of the core is $LiNi_aCo_bMn_cM_dO_2$.

The coating layer is an oxide containing the element Q, and the coating layer has a thermal conductivity coefficient of $\leq 0.2$ W/(m•K). In the present invention, the thermal conductivity of the ternary material can be reduced by coating a material having a low thermal conductivity.

In the present invention, the high-nickel ternary positive electrode material satisfies the relationship shown in Formula I:

$$\gamma=\alpha*D104/K \quad \text{Formula I}$$

In Formula I, $\gamma$ is a thermal safety coefficient of the high-nickel ternary positive electrode material; in the present invention, the $\gamma$ value is controlled between 0.73 and 14.00. When $\gamma$ is lower than 0.73, a DSC peak temperature will be lower than 213°C, and the high nickel ternary positive electrode material has a poor thermal safety. When the $\gamma$ value is between 0.73 and 14.00, the high nickel ternary positive electrode material has a high thermal safety; preferably, the $\gamma$ value is controlled between 1.07 and 14.00, the high nickel ternary positive electrode material has a higher thermal safety; further preferably, the $\gamma$ value is controlled between 1.45 and 13.13; more preferably, the $\gamma$ value is controlled between 7.74 and 13.13.

$\alpha$ is a cross-sectional porosity of the high-nickel ternary positive electrode material. High porosity can reduce the overall thermal conductivity of the high-nickel ternary positive electrode material, and play a role in slowing down the inward transfer of heat generated by side reactions on the surface of the material, thereby effectively improving the stability of the internal structure of the material and inhibiting the occurrence of internal side reactions to improve the thermal safety of the material. In the present invention, $1\% \leq \alpha \leq 5\%$, preferably, $\alpha$ is 1%, 2%, 3%, 4%, 5%, or any numerical value between 1% - 5%.

D104 is a parameter of the high-nickel ternary positive electrode material in a XRD test. The increase of the unit cell parameter D104 for unit cells decreases the phonon thermal conductivity of the material. In the present invention, $45 \leq D104 \leq 70$, preferably, D104 is 45, 50, 55, 60, 65, 70, or any numerical value between 45 - 70.

K is a thermal conductivity of the high-nickel ternary positive electrode material, $0.1 W/(m\cdot K) \leq K \leq 0.6 W/(m\cdot K)$. Preferably, K is 0.1, 0.2, 0.3, 0.4, 0.5, 0.6, or any numerical value between 0.1-0.6 $W/(m\cdot K)$.

The high-nickel ternary positive electrode material provided by the present invention has a low thermal conductivity, so that when the material reacts with an electrolyte solution, the heat release will be delayed accordingly, thus slowing down the occurrence of side reactions.

The present invention also provides a method for preparing the above-described high-nickel ternary positive electrode material, including the following steps:

A) mixing a ternary hydroxide precursor $Ni_aCo_bMn_c(OH)_2$, a lithium source, and a compound containing the element M, and then sintering under an oxygen atmosphere to obtain a sintered product;

B) washing and drying the sintered product, and mixing the sintered product with a compound containing the element Q, and then sintering under the oxygen atmosphere to obtain the high-nickel ternary positive electrode material.

In the present invention, firstly, a ternary hydroxide precursor $Ni_aCo_bMn_c(OH)_2$, a lithium source, and a compound containing the element M are mixed to obtain a mixture.

Where the lithium source is selected from LiOH;

the compound containing the element M is selected from one or more of $Al(OH)_3$, $Al_2O_3$, SrO, $TiO_2$, $ZrO_2$, $Zr(OH)_4$, $Y_2O_3$, $BaCO_3$, MgO, or $MoO_3$;

the molar ratio of the ternary hydroxide precursor $Ni_aCo_bMn_c(OH)_2$ to the lithium source is 1:1.04;

the molar ratio of the ternary hydroxide precursor $Ni_aCo_bMn_c(OH)_2$ to the compound containing the element M is 1:d, where d < 0.1, preferably 0.01-0.04.

The present invention has no special limitation on the mixing method herein, and mixing methods known to persons of ordinary skill in the art are sufficient.

Then, the mixture is sintered under an oxygen atmosphere to obtain a sintered product.

Where, the sintering is performed at a temperature of 740°C-820°C, preferably 740, 760, 780, 800, 820, or any numerical value between 740°C-820°C, for a time of 10-15 hours, preferably 10, 11, 12, 13, 14, 15, or any numerical value between 10-15 hours.

Next, the sintered product is cooled, crushed and sieved, then washed and dried, then mixed with a compound containing the element Q, and then sintered under the oxygen atmosphere to obtain a high-nickel ternary positive electrode material.

Where the compound containing the element Q is selected from $TiO_2$, SrO, or $SrTiO_3$.

The sintering is performed at a temperature of 350-500 °C, preferably 350, 400, 450, 500, or any numerical value between 350-500 °C, for a time of 8-12 hours, preferably 8, 9, 10, 11, 12, or any numerical value between 8-12 hours.

The invention also provides a lithium ion battery including the high-nickel ternary positive electrode material described as above.

The high-nickel ternary positive electrode material provided by the present invention has a high DSC peak temperature, and thus has a high thermal safety. The thermal safety performance in the present invention is characterized based on the peak value in the DSC test.

According to the high-nickel ternary positive electrode material provided in the present invention, significant factors affecting the thermal safety of the ternary positive electrode material are identified by measuring the thermal conductivity K, the D104 value in XRD, and the porosity $\alpha$ of the material. In addition, corresponding materials are prepared by means of controlling these parameters and satisfying the relationship shown in Formula I for verification. Furthermore, the high-nickel ternary positive electrode material is improved by coating with a coating material having a low thermal conductivity. The thermal conductivity of the coated material is tested, and the results indicate that with an increase in the coating amount of the coating material, the thermal conductivity of the ternary positive electrode material is in overall decrease, and the ternary positive electrode material has a better thermal safety.

In order to further understand the present invention, the high-nickel ternary positive electrode material having high thermal safety provided by the present invention and the preparation method therefor and use thereof are described below in combination with embodiments, and the protection scope of the present invention is not limited by the following embodiments.

**Example**

1) Sample A was $LiNi_{0.908}Co_{0.048}Mn_{0.029}M_{0.015}O_2$, M was Al, where $\alpha$, D104, K, and $\gamma$ were 1%, 45, 0.62, and 0.73, respectively.

Preparation method:

(1) the hydroxide $Ni_{0.92}Co_{0.05}Mn_{0.03}(OH)_2$, LiOH, and the additive $Al(OH)_3$ were mixed, where the molar ratio of $Ni_{0.92}Co_{0.05}Mn_{0.03}(OH)_2$ to LiOH was 1:1.04, and the molar proportion of $Al(OH)_3$ was 0.015;
(2) the homogeneously mixed material was sintered under an oxygen atmosphere at 740°C for 15h, cooled, crushed and sieved.

2) Sample B was $LiNi_{0.908}Co_{0.048}Mn_{0.029}M_{0.015}O_2$, M was Sr, where $\alpha$, D104, K, and $\gamma$ were 2%, 60, 0.41, and 2.93, respectively.

Preparation method:

(1) the hydroxide $Ni_{0.92}Co_{0.05}Mn_{0.03}(OH)_2$, LiOH, and the additive SrO were mixed, where the molar ratio of $Ni_{0.92}Co_{0.05}Mn_{0.03}(OH)_2$ to LiOH was 1:1.04, and the molar proportion of SrO was 0.015;
(2) the homogeneously mixed material was sintered under an oxygen atmosphere at 780°C for 15h, cooled, crushed and sieved.

3) Sample C was $LiNi_{0.908}Co_{0.048}Mn_{0.029}M_{0.015}O_2$, M was Zr, where $\alpha$, D104, K, and $\gamma$ were 3%, 70, 0.16, and 13.13, respectively.

Preparation method:

(1) the hydroxide $Ni_{0.92}Co_{0.05}Mn_{0.03}(OH)_2$, LiOH, and the additive $ZrO_2$ were mixed, where the molar ratio of $Ni_{0.92}Co_{0.05}Mn_{0.03}(OH)_2$ to LiOH was 1: 1.04, and the molar proportion of $ZrO_2$ was 0.015;
(2) the homogeneously mixed material was sintered under an oxygen atmosphere at 820°C for 15h, cooled, crushed and sieved.

4) Sample D was $LiNi_{0.908}Co_{0.048}Mn_{0.029}M_{0.015}O_2$, M was Y, where $\alpha$, D104, K, and $\gamma$ were 4%, 60, 0.31, and 7.74, respectively.

Preparation method:

(1) the hydroxide $Ni_{0.92}Co_{0.05}Mn_{0.03}(OH)_2$, LiOH, and the additive $Y_2O_3$ were mixed, where the molar ratio of $Ni_{0.92}Co_{0.05}Mn_{0.03}(OH)_2$ to LiOH was 1: 1.04, and the molar proportion of $Y_2O_3$ was 0.015;
(2) the homogeneously mixed material was sintered under an oxygen atmosphere at 780°C for 15h, cooled, crushed and sieved.

5) Sample E was $LiNi_{0.908}Co_{0.048}Mn_{0.029}M_{0.015}O_2$, M was Mo, where $\alpha$, D104, K, and $\gamma$ were 3%, 70, 0.25, and 8.4, respectively.

Preparation method:

(1) the hydroxide $Ni_{0.92}Co_{0.05}Mn_{0.03}(OH)_2$, LiOH, and the additive $MoO_3$ were mixed, where the molar ratio of $Ni_{0.92}Co_{0.05}Mn_{0.03}(OH)_2$ to LiOH was 1: 1.04, and the molar proportion of $MoO_3$ was 0.015;
(2) the homogeneously mixed material was sintered under an oxygen atmosphere at 800°C for 15h, cooled, crushed and sieved.

6) Sample F was obtained by coating sample A with 1000 ppm of coating agent Q. Sample F was Li-$Ni_{0.9075}Co_{0.048}Mn_{0.029}M_{0.015}Q_{0.0005}O_2$, M was Al, Q was Sr, where $\alpha$, D104, K, and $\gamma$ were 1%, 45, 0.53, and 0.85, respectively.

Preparation method: Sample A was washed with water in a water-to-material ratio of 1:1 and then centrifuged and dried at 140°C for 12 h, then homogeneously mixed with 1000 ppm SrO, and then sintered at 500°C for 12 h under an oxygen atmosphere to obtain sample F.

7) Sample G was obtained by coating sample A with 3000 ppm of coating agent Q. Sample G was Li-$Ni_{0.9065}Co_{0.048}Mn_{0.029}M_{0.015}Q_{0.0015}O_2$, M was Al, Q was Ti, where $\alpha$, D104, K, and $\gamma$ were 1%, 45, 0.42, and 1.07, respectively.

Preparation method: Sample A was washed with water in a water-to-material ratio of 1:1 and then centrifuged and dried at 140°C for 12 h, then homogeneously mixed with 3000 ppm $TiO_2$, and then sintered at 500°C for 12 h under an oxygen atmosphere to obtain sample G.

8) Sample H was obtained by coating sample A with 5000 ppm of coating agent Q. Sample H was Li-$Ni_{0.9055}Co_{0.048}Mn_{0.029}M_{0.015}Q_{0.0025}O_2$, M was Al, Q was Sr and Ti, where $\alpha$, D104, K, and $\gamma$ were 1%, 45, 0.31, and 1.45, respectively.

Preparation method: Sample A was washed with water in a water-to-material ratio of 1:1 and then centrifuged and dried at 140°C for 12 h, then homogeneously mixed with 5000 ppm $SrTiO_3$, and then sintered at 500°C for 12 h under an oxygen atmosphere to obtain sample G.

**Comparative Example**

1) Sample I was $LiNi_{0.92}Co_{0.05}Mn_{0.03}O_2$, where $\alpha$, D104, K, and $\gamma$ were 1%, 40, 0.86, and 0.47, respectively.

Preparation method:

(1) the hydroxide $Ni_{0.92}Co_{0.05}Mn_{0.03}(OH)_2$ and LiOH were mixed according to the molar ratio of 1: 1.04;
(2) the homogeneously mixed material was sintered under an oxygen atmosphere at 740°C for 15h, cooled, crushed and sieved.

The performances of the above obtained samples A~I were tested as follows:

1. DSC test

(1) A positive electrode material and acetylene black according to the mass ratio of 98:2 were disperse in a NMP solution, in which PVDF having a concentration of 5% is dissolved, and stirred for 20min, where the concentration of the positive electrode material is 60%.
(2) The obtained slurry was uniformly coated in an aluminum foil and dried at 110°C for 4 hours in a vacuum drying oven.
(3) The dried electrode sheet was cut into circular sheets having a diameter of 15mm, and a positive electrode shell, electrode sheet, an electrolyte solution (EC/DMC/EMC with a volume ratio of 1:1, LiPF6 having a concentration of 1 mol/L is included), a separator (CelgardPP/PE/PP, a three-layer composite membrane), a lithium sheet, the electrolyte solution, nickel foam, and a negative electrode shell were assembled and sealed to obtain a battery in a glove box,
(4) The obtained battery was stood for 24 hours and then charged using a current of 0.1C.
(5) The charged battery was disassembled in the glove box, and the obtained electrode sheet was subjected to NMP cleaning and drying for DSC test. In the glove box, 2~3mg of the positive electrode sheet was taken and placed at the bottom of a crucible, into which 1.7mg of 1mol/L of a $LiPF_6$ solution (in which solvents include EC and DMC with a volume ratio of 1:1) was dropped, so that the $LiPF_6$ solution is uniformly distributed on the surface of the electrode sheet, and then the crucible was sealed in a special mold, and the sealed crucible was put into a differential scanning calorimeter with nitrogen gas introduced. The test was performed at a temperature rise rate of 10°C/min, the maximum temperature was set to 350°C.

2. Thermal conductivity test: laser thermal conductivity analyzer LFA was used (NETZSCH, Germany).

3. Porosity test: a sample was subjected to an ion milling instrument to obtain the cross section having a flat surface, which was subjected to SEM test and then software processing to obtain the porosity.

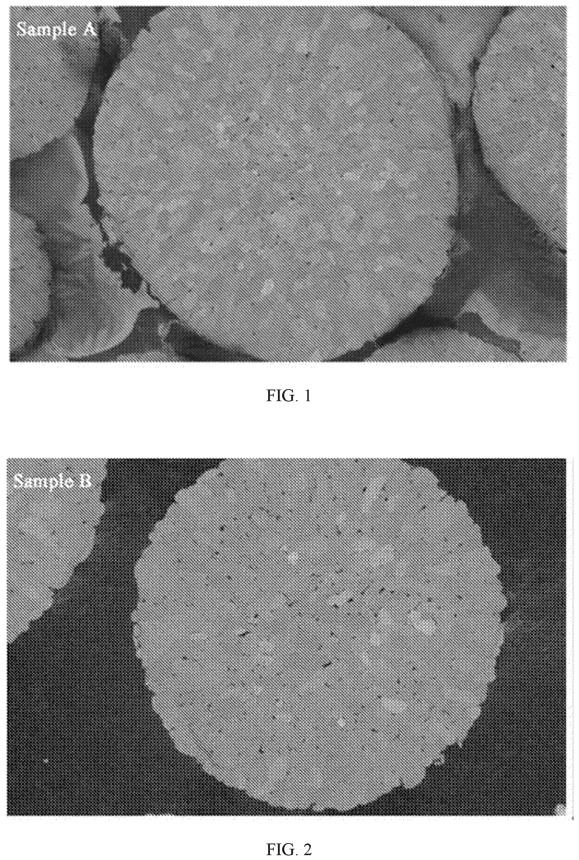

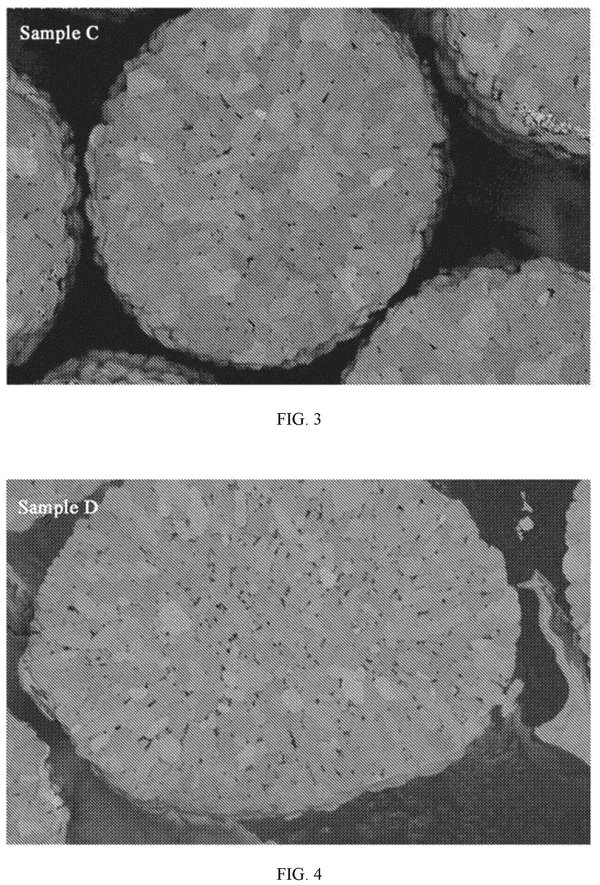

Samples A, B, C, D, and E are different in porosity $\alpha$, unit cell parameter D104, and thermal conductivity K. The increase of D104 makes the layer spacing of transition metal layers of the material increase, and at the same time, the space of the Li layer is compressed to result in restricted Li ion transport and reduced ionic thermal conductivity. In addition, the increase of the crystal lattice spacing makes the phonon thermal conductivity decrease, thereby leading to the overall reduction of the thermal conductivity. When the porosity between primary particles in secondary particles is higher, the diffusion of heat from the surface to the interior of the material is impeded, resulting in a reduction of the overall thermal conductivity and inhibiting the spread of heat from the exterior to the interior of the material. FIGs. 1~5 show the cross-sectional pore distribution of samples A-E, respectively.

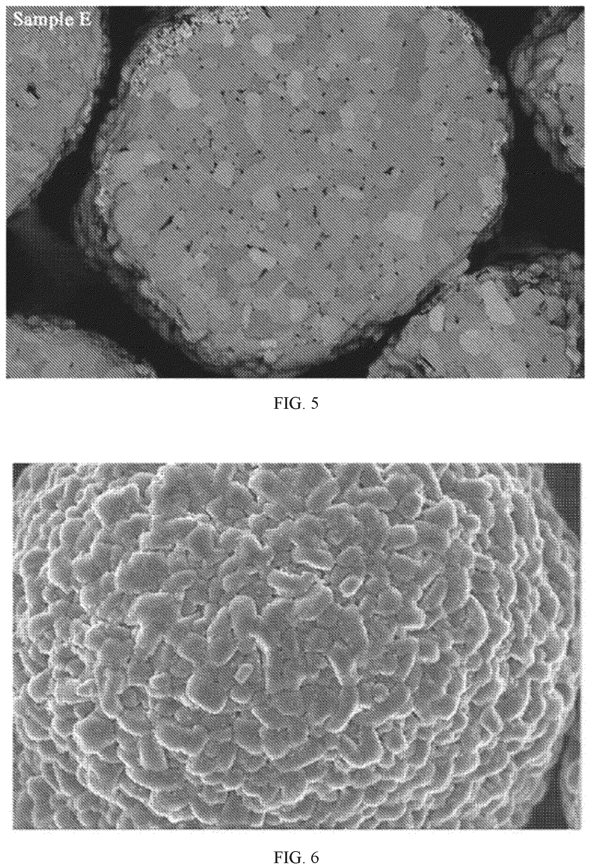

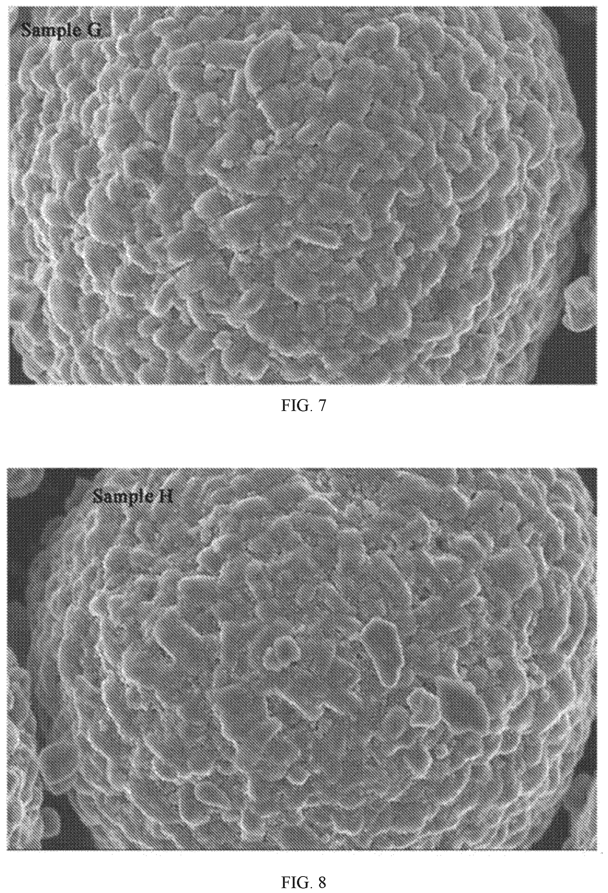

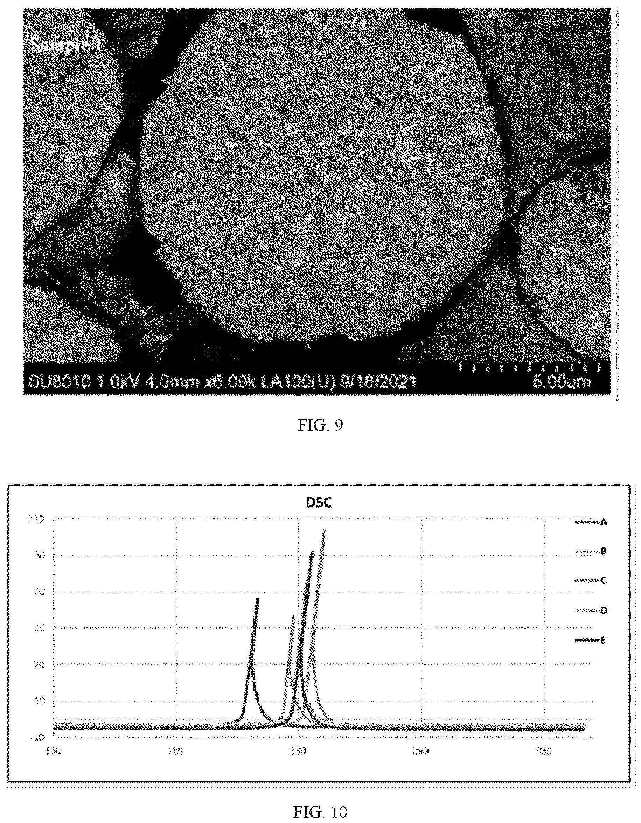

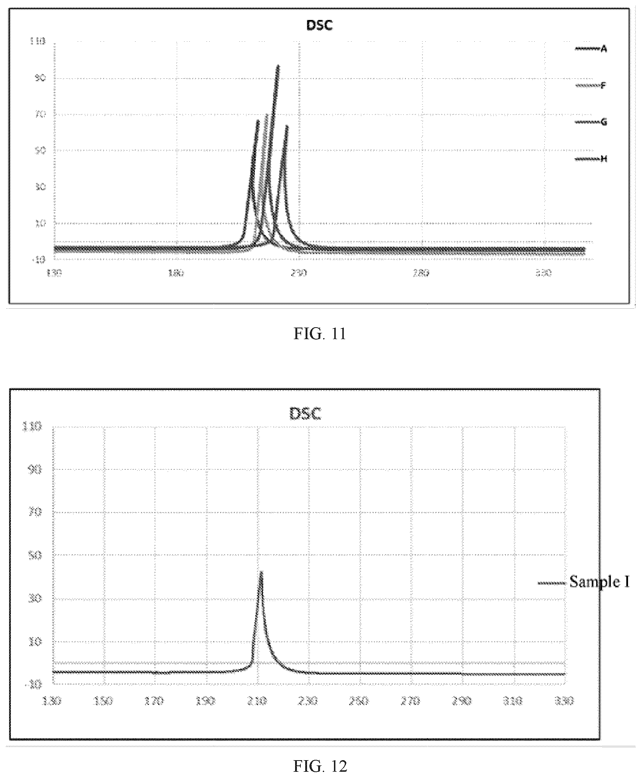

Samples F-H are a material formed by coating the sample A with 1000ppm, 3000ppm, or 5000ppm of a Q coating agent respectively, and the overall thermal conductivity of the material is decreased by coating the Q coating material having low thermal conductivity and changing the coating amount of the Q coating material. Therefore, the thermal conductivity of the material decrease, and thus the influence of external thermal reaction on the inside of secondary particles is reduced. In addition, the coating layer has a certain insulating effect on the material and the electrolyte solution, this can effectively inhibit side reactions on the surface of the material to reduce the heat release and the collapse of the structure of the material, thus improving the thermal safety of the material. FIGs. 6-9 show the SEM diagrams of the surfaces of sample F-I, and FIGs. 10-12 show a comparison of DSC data of different materials. In FIG. 10, the samples are A, B, D, E and C in order of peak positions from left to right; in FIG. 11, the samples are A, F, G and H in order of peak positions from left to right, and FIG. 12 shows DSC data of Sample 1.

Table 1 shows $\alpha$, D104, K, $\gamma$, and DSC peaks corresponding to materials A~I.

Table 1

| Sample | $\alpha$ | D104 | K | $\gamma$ | DSC Peak temperature (°C) |
|---|---|---|---|---|---|
| A | 0.01 | 45 | 0.62 | 0.73 | 213 |
| B | 0.02 | 60 | 0.41 | 2.93 | 227 |
| C | 0.03 | 70 | 0.16 | 13.13 | 240 |
| D | 0.04 | 60 | 0.31 | 7.74 | 233 |
| E | 0.03 | 70 | 0.25 | 8.40 | 235 |
| F | 0.01 | 45 | 0.53 | 0.85 | 216 |
| G | 0.01 | 45 | 0.42 | 1.07 | 221 |
| H | 0.01 | 45 | 0.31 | 1.45 | 225 |
| I | 0.01 | 40 | 0.86 | 0.47 | 211 |

When $\gamma$ is lower than 0.73, the DSC peak temperature will be lower than 213°C, the thermal safety of high-nickel ternary positive electrode material is poor. When $\gamma$ value $\geq$ 1.07, the DSC peak temperature $\geq$ 221°C, the thermal safety performance is more excellent, when $\gamma$ value $\geq$ 7.74, the DSC peak temperature $\geq$ 233°C, the thermal safety performance is very excellent, and when $\gamma$ value=13.13, the DSC peak temperature is as high as 240°C.

The above are only preferred embodiments of the present invention, it should be noted that, for persons of ordinary skill in the art, several improvements and modifications can be made without deviating from the principle of the invention, and these improvements and modifications shall also be considered as the protection scope of the present invention.

**Claims**

1.  A high-nickel ternary positive electrode material having high thermal safety, therein the high-nickel ternary positive electrode material has a chemical formula of:

LiNi$_a$Co$_b$Mn$_c$M$_d$Q$_e$O$_2$,

wherein 0.8 < a < 0.95, b < 0.2, c < 0.2, d < 0.1, a+b+c+d+e=1,
M is a doping element, selected from one or more of Sr, Ti, Al, Zr, Y, Ba, Mg, or Mo,
Q is a coating element, selected from one or both of Sr or Ti,
the high-nickel ternary positive electrode material satisfies a relationship shown in Formula I:

$$\gamma = \alpha * D104 / K \quad \text{Formula I}$$

in Formula I, $0.73 \leq \gamma \leq 14.00$, $\gamma$ is a thermal safety coefficient of the high-nickel ternary positive electrode material, $\alpha$ is a cross-sectional porosity of the high-nickel ternary positive electrode material, D104 is a parameter of the high-nickel ternary positive electrode material in a XRD test, and K is a thermal conductivity of the high-nickel ternary positive electrode material.

2.  The high-nickel ternary positive electrode material according to claim 1, wherein $45 \leq D104 \leq 70$.

3.  The high-nickel ternary positive electrode material according to claim 1, wherein $1\% \leq \alpha \leq 5\%$.

4.  The high-nickel ternary positive electrode material according to claim 1, wherein $0.1 W/(m \cdot K) \leq K \leq 0.6 W/(m \cdot K)$.

5.  The high-nickel ternary positive electrode material according to claim 1, comprising a core, and a coating layer, and the coating layer has a thermal conductivity coefficient of $\leq 0.2 W/(m \cdot K)$.

6.  A method for preparing the high-nickel ternary positive electrode material according to any one of claim 1 to 5, comprising the following steps:

    A) mixing a ternary hydroxide precursor Ni$_a$Co$_b$Mn$_c$(OH)$_2$, a lithium source, and a compound containing the element M, and then sintering under an oxygen atmosphere to obtain a sintered product;
    B) washing and drying the sintered product, mixing the sintered product with a compound containing the element Q, and then sintering under the oxygen atmosphere to obtain the high-nickel ternary positive electrode material.

7.  The method according to claim 6, wherein the lithium source is selected from LiOH;

    the compound containing the element M is selected from one or more of Al(OH)$_3$, Al$_2$O$_3$, SrO, TiO$_2$, ZrO$_2$, Zr(OH)$_4$, Y$_2$O$_3$, BaCO$_3$, MgO, or MoO$_3$;
    the compound containing the element Q is selected from TiO$_2$, SrO, or SrTiO$_3$.

8.  The method according to claim 6, wherein in step A), the sintering is performed at a temperature of 740°C - 820°C for a time of 10 - 15 hours.

9.  The method according to claim 6, wherein in step B), the sintering is performed at a temperature of 350 - 500°C for a time of 8 - 12 hours.

10. A lithium ion battery comprising the high-nickel ternary positive electrode material according to any one of claims 1 to 5, or the high-nickel ternary positive electrode material prepared by the method according to any one of claims 6 to 9.

FIG. 1

FIG. 2

FIG. 3

FIG. 4

FIG. 5

FIG. 6

EP 4 489 114 A1

FIG. 7

FIG. 8

13

FIG. 9

FIG. 10

FIG. 11

FIG. 12

## INTERNATIONAL SEARCH REPORT

International application No.

**PCT/CN2023/076050**

### A. CLASSIFICATION OF SUBJECT MATTER

H01M4/36(2006.01)i;H01M4/525(2010.01)i;H01M4/485(2010.01)i;H01M4/505(2010.01)i;H01M4/62(2006.01)i

According to International Patent Classification (IPC) or to both national classification and IPC

### B. FIELDS SEARCHED

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNTXT; ENTXT; ENTXTC; DWPI; CNKI: 三元, 镍, 钴, 锰, 包覆, 掺杂, 高镍, ni, co, mn, 锶, sr, 钛, ti, 正极, 热导率, 导热系数, D104, DSC, ternary, nickel, cobalt, manganese, coated, doped, high, strontium, titanium, positive, cathode, thermal, conductivity, differential, scanning, calorimetry

### C. DOCUMENTS CONSIDERED TO BE RELEVANT

| Category* | Citation of document, with indication, where appropriate, of the relevant passages | Relevant to claim No. |
|---|---|---|
| PX | CN 115172697 A (NINGBO RONBAY NEW ENERGY TECHNOLOGY CO., LTD.) 11 October 2022 (2022-10-11)<br>claims 1-10 | 1-10 |
| A | CN 111463411 A (TIANJIN GUOAN MENGGULI NEW MATERIALS SCIENCE & TECHNOLOGY CO., LTD.) 28 July 2020 (2020-07-28)<br>description, paragraphs 24-103 | 1-10 |
| A | CN 111244397 A (TIANJIN GUOAN MENGGULI NEW MATERIALS SCIENCE & TECHNOLOGY CO., LTD.) 05 June 2020 (2020-06-05)<br>entire document | 1-10 |
| A | CN 112103496 A (HUNAN CHANGYUAN LICO CO., LTD. et al.) 18 December 2020 (2020-12-18)<br>entire document | 1-10 |
| A | CN 114400316 A (NINGBO RONBAY NEW ENERGY TECHNOLOGY CO., LTD.) 26 April 2022 (2022-04-26)<br>entire document | 1-10 |

☑ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **14 March 2023** | **20 March 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

International application No.

**PCT/CN2023/076050**

**C.    DOCUMENTS CONSIDERED TO BE RELEVANT**

| Category* | Citation of document, with indication, where appropriate, of the relevant passages | Relevant to claim No. |
|---|---|---|
| A | US 2021126242 A1 (CONTEMPORARY AMPEREX TECHNOLOGY CO., LTD.) 29 April 2021 (2021-04-29)<br>entire document | 1-10 |

Form PCT/ISA/210 (second sheet) (July 2022)

**INTERNATIONAL SEARCH REPORT**
Information on patent family members

International application No.

**PCT/CN2023/076050**

| Patent document cited in search report | | | Publication date (day/month/year) | Patent family member(s) | | | Publication date (day/month/year) |
|---|---|---|---|---|---|---|---|
| CN | 115172697 | A | 11 October 2022 | None | | | |
| CN | 111463411 | A | 28 July 2020 | None | | | |
| CN | 111244397 | A | 05 June 2020 | None | | | |
| CN | 112103496 | A | 18 December 2020 | None | | | |
| CN | 114400316 | A | 26 April 2022 | None | | | |
| US | 2021126242 | A1 | 29 April 2021 | WO | 2020134781 | A1 | 02 July 2020 |
| | | | | EP | 3800710 | A1 | 07 April 2021 |
| | | | | EP | 3800710 | A4 | 28 July 2021 |
| | | | | EP | 3800710 | B1 | 15 February 2023 |
| | | | | US | 11177468 | B2 | 16 November 2021 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210841386
- CN 108550802 A

- CN 112811403 A